# FASCICULE DE BREVET EUROPEEN

(11) **EP 0 368 417 B1**
(45) Date de publication et mention de la délivrance du brevet: **01.02.1995**
(21) Numéro de dépôt: 89202825.9
(22) Date de dépôt: 08.11.1989
(51) Int. Cl.: H04N 7/00, H04N 11/08, H04N 5/16

(54) **Appareil muni d'un dispositif de restitution de la composante continue amélioré**
Anordnung mit einer verbesserten Gleichstrompegelauswertungsvorrichtung
Apparatus comprising an improved device for clamp-error compensation

(30) Priorité: 10.11.1988 FR 8814685; 30.05.1989 FR 8907097
(43) Date de publication de la demande: 16.05.1990
(73) Titulaire: LABORATOIRES D'ELECTRONIQUE PHILIPS, 94450 Limeil-Brévannes (FR); Philips Electronics N.V., 5621 BA Eindhoven (NL)
(72) Inventeur: Salembier, Philippe Société Civile S.P.I.D., F-75007 Paris (FR); Hayet, Pascal Société Civile S.P.I.D., F-75007 Paris (FR)
(74) Mandataire: Caron, Jean

(56) Documents cités:
- EP-A- 0 167 430
- EP-A- 0 282 106

## Description

La présente invention concerne un appareil destiné à recevoir un signal véhiculant des informations de luminance et de chrominance analogiques associées à des périodes de signal numérique codé, muni d'un dispositif de restitution de la composante continue et d'un circuit décodeur pour décoder le signal numérique reçu. Un tel signal est notamment un signal de type MAC, qui comporte des informations analogiques de luminance et de chrominance et des informations numériques codées par paquets ainsi que des paliers de tension analogique de référence de niveau de gris moyen.

Un tel appareil est par exemple un téléviseur équipé pour la réception d'un signal en D2-MAC/paquet, ou bien un "tuner satellite" ou même n'importe quel appareil muni d'un organe effectuant un traitement du signal dans un système de transmission.

Un tel appareil est connu par exemple de la demande de brevet FR-A-2 610 773. Selon ce document, un téléviseur est muni de moyens pour rétablir la composante continue, dans différentes étapes successives et exclusives l'une de l'autre, d'abord à partir des niveaux de crête mesurés sur la totalité du signal, puis à partir des niveaux de crête mesurés uniquement sur la partie du signal qui est numérique, et enfin à partir des paliers de tension de référence du signal.

Le problème posé vient du fait que la composante dite "continue", qui comprend aussi une composante basse fréquence, est affectée par les perturbations inhérentes à tout système de transmission, qu'elles soient ou non corrélées avec le signal de télévision. Ces perturbations constituent un signal parasite comprenant deux composantes, le bruit à fréquence basse devant la fréquence ligne (cassure basse fréquence, dispersion d'énergie, résidu de 50 Hz, etc...), et le bruit de modulation dont la répartition spectrale de puissance dépend du type de transmission.

Dans le téléviseur décrit par le document ci-dessus, lorsqu'on utilise les niveaux de crête mesurés sur la partie numérique du signal, ces niveaux sont susceptibles de varier avec le contenu numérique du signal, et la restitution de la composante continue n'est pas précise, et lorsqu'on utilise le palier de référence pour extraire cette composante, on se heurte aux limites théoriques de restitution d'un signal dans du bruit. En effet, la trop faible durée du palier ne permet pas une intégration suffisante sur une ligne. Des filtres simples ont été proposés qui intégrent les informations de plusieurs lignes. Basés sur le principe d'un filtre récursif du premier ordre, ils possèdent l'avantage de réduire le bruit dans le cas de types de transmission défavorables, mais ils conduisent à une erreur de mesure de la composante basse fréquence. Les essais entrepris dans le cas d'une transmission d'un signal de télévision selon la norme D2-MAC Paquets montrent la difficulté de réaliser un compromis entre bruit et résidus basse fréquence, compromis devant être adapté à chaque cas particulier que constitue chaque type de modulation.

L'invention fournit un appareil dans lequel ces problèmes sont résolus. A cet effet, le dispositif de restitution de la composante continue comprend un organe de codage réalisant à partir du signal numérique décodé un codage identique à celui utilisé pour la création du signal reçu, un circuit d'estimation de la composante continue calculant ladite estimation à partir des différences entre le signal codé reçu et le signal codé reconstruit par le susdit organe de codage, cette estimation constituant un signal de correction de composante continue, et un circuit soustracteur pour retrancher au signal reçu ledit signal de correction, sur toute la durée d'une ligne.

Il comporte aussi avantageusement, en sortie du circuit d'estimation, un circuit de filtrage, qui est avantageusement un simple moyenneur. Ceci a pour avantage de diminuer l'incidence du bruit sur la détermination de la composante continue.

L'appareil comporte avantageusement en aval du circuit d'estimation de la composante continue un filtre utilisant les signaux de correction de plusieurs périodes de balayage de lignes à la fois pour affiner le signal de correction, avant sa soustraction au signal reçu dans le circuit soustracteur, ce filtre étant du type à réponse impulsionnelle finie, par exemple un moyenneur, et un circuit de retardement du signal reçu placé en aval du circuit soustracteur, pour compenser le retard dû au filtre.

L'invention est donc basée sur le principe d'extraire des informations supplémentaires sur la composante basse fréquence du signal en exploitant efficacement la période numérique, et d'autre part d'intégrer ces informations sur plusieurs lignes à l'aide d'un filtre approprié préservant la composante basse fréquence.

L'appareil est en outre avantageusement muni, à l'entrée du décodeur, d'un circuit de soustraction dans lequel le signal de correction est soustrait au signal reçu. Cela a pour effet d'augmenter la fiabilité du décodage.

Une autre caractéristique importante de l'invention est basée sur la remarque que la présence de l'organe de codage permet une estimation de la fiabilité du signal reçu. L'appareil est donc avantageusement muni d'un circuit de validation qui, à partir de la mesure de l'écart entre le signal reçu et le signal reconstruit, commande la prise en compte du signal de correction.

La figure 1 est un schéma synoptique du mode de réalisation préféré d'un dispositif de restitution de la composante continue dans un appareil selon l'invention.

La figure 2 illustre des niveaux qui sont pris en compte pour décision et recodage dans le cas d'un signal de type duobinaire, et d'un décodeur à seuil.

On dispose d'un signal amplifié, par exemple de type D2-MAC-Paquet, qui présente d'abord une période de données numériques codées en duobinaire dont la durée est de 10»s, puis un palier de référence du niveau de gris moyen qui ne dure que 0,75»s, suivi d'une période de signal analogique représentant les informations de chrominance et d'une période de signal analogique représentant les informations de luminance qui terminent la ligne.

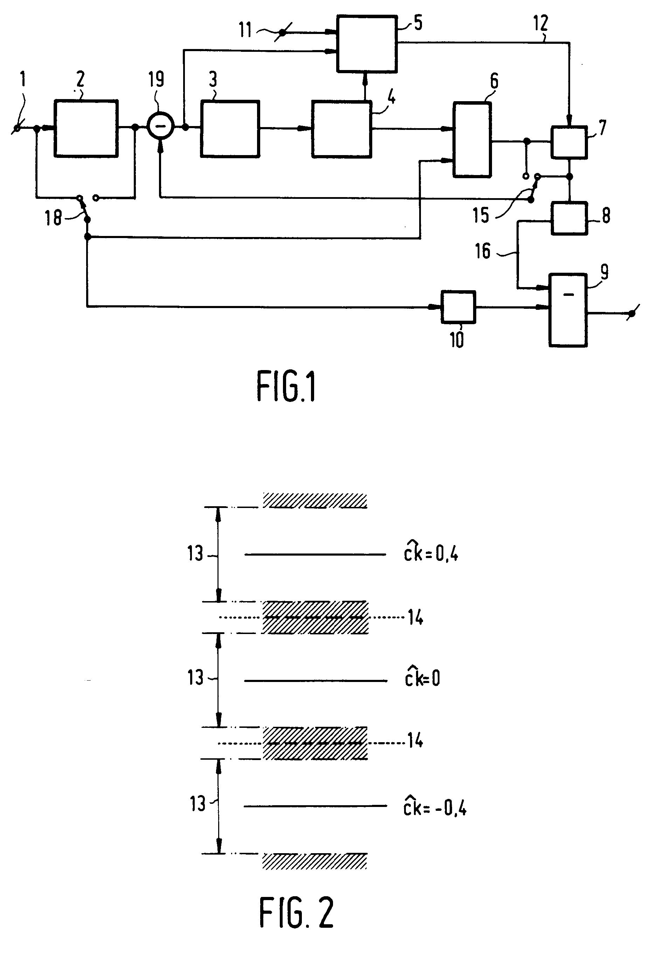

Sur la figure 1, le signal amplifié disponible en 1 est amené en premier lieu à un dispositif classique d'alignement de la tension continue 2 basé sur les paliers de ligne. Le dispositif comporte ensuite un décodeur des données numériques 3, puis un organe de codage 4 de ces données du type de ceux utilisés pour créer le signal reçu. Le décodeur de données numérique 3 peut prendre classiquement la forme d'un filtre passe-bas de fréquence de coupure 5 MHz suivi d'un décodeur à seuil ou éventuellement un décodeur de Viterbi.

Un circuit associé 5 permet de mesurer la validité du signal numérique reconstruit en se basant sur le signal présent à l'entrée du décodeur 3. Le signal numérique codé reconstruit est comparé dans le circuit d'estimation 6 au signal disponible, celui ci étant prélevé soit à l'entrée 1, soit en sortie du système classique d'alignement de la tension continue 2, ce choix étant symbolisé sur la figure par un inverseur 18 qui n'est pas obligé d'exister physiquement, un choix définitif de branchement pouvant être fait par construction. A partir de cette comparaison, le circuit d'estimation 6 forme un signal de correction. Dans sa forme la plus simple le circuit d'estimation 6 est un circuit qui soustrait l'un de l'autre le signal reçu et le signal reconstruit . Il peut aussi, dans une version plus sophistiquée, mais non indispensable, prendre la forme d'un circuit récursif qui corrige un signal de correction précédent en lui ajoutant un signal calculé à partir des différences entre le signal reçu et le signal reconstruit (c'est-à-dire non seulement la différence au sens arithmétique mais aussi d'autres paramètres représentant une non similitude) pondérées par un coefficient fixe ou variable qui peut dépendre des caractéristiques du canal de transmission.

Le circuit d'estimation 6 est suivi par un circuit de filtrage 7. En plus des informations présentes sur le palier de référence ordinaire (dont on dispose toujours, les signaux de ce palier étant traités par le circuit 6 comme faisant partie de la salve duobinaire), le circuit 7 dispose des informations extraites de la salve duobinaire et fournies par le circuit 6, qui permettent, lorsqu'elles sont validées, de reconstituer la composante basse fréquence. Ce circuit 7, qui prend, dans un mode de réalisation préférentiel, la forme d'un simple moyenneur, fournit une valeur-résultat par ligne. Le signal de correction est soustrait du signal reçu à l'entrée du décodeur 3, dans un circuit de soustraction 19. Selon la position de l'inverseur 15, le signal ainsi soustrait est soit le signal disponible à la sortie du circuit d'estimation 6, soit celui disponible à la sortie du circuit de filtrage 7. Comme dans le cas de l'inverseur 18, l'inverseur 15 peut ne pas exister au cas où un branchement définitif est choisi à la construction. La valeur-résultat issue du circuit de filtrage 7 est ensuite traitée par un circuit 8 afin d'affiner sa valeur en la pondérant par celles obtenues pour les lignes précédentes. Ce circuit qui est un filtre peut soit être du type récursif et délivrer une information synchrone avec la ligne courante, soit délivrer une information retardée de la durée d'un nombre entier de lignes. En dernier lieu, le signal de correction est soustrait par le circuit soustracteur 9, sur toute la durée d'une ligne, au signal disponible, soit à l'entrée 1, soit éventuellement en sortie du système classique d'alignement de la tension continue 2, ce signal étant éventuellement retardé (selon le retard du filtre de lignes) dans un circuit 10 afin d'assurer la synchronisation des deux signaux.

La figure 2 dans laquelle les références 14 indiquent des seuils de décision et les références 13 indiquent trois plages de même largeur, ladite largeur définissant un seuil de fiabilité, illustre la reconstruction du train duobinaire dans le cas où l'élément 3 est un décodeur à seuil.

Cette reconstruction est résumée par les opérations logiques suivantes :
si |cₖ-C_{c}| ≦ seuil de décision(14), alors ĉₖ=0
si cₖ-C_{c} < seuil de décision négatif(14), alors ĉₖ=-0,4
si cₖ-C_{c} > seuil de décision positif(14), alors Ĉₖ=+0,4
où cₖ représente la valeur (valeurs numériques en volts) de l'échantillon duobinaire reçu ĉₖ la valeur de l'échantillon duobinaire reconstruit, et C_{c} la valeur de la composante continue soustraite à l'entrée du décodeur 3.

Le circuit de contrôle 5 fournit une estimation de fiabilité de la reconstruction du signal duobinaire sous la forme d'un signal de validation 12 destiné au module de filtrage 7. Il agit pour cela de la manière suivante : le signal reconstruit est comparé au signal duobinaire présent à l'entrée du décodeur, et une tension appliquée en 11 définit un seuil de fiabilité qui représente la différence maximale autorisée entre les deux signaux au-delà de laquelle l'échantillon reconstruit ne sera plus pris en compte dans le calcul de la composante basse fréquence. Par exemple dans le cas d'un décodage/recodage en D2-MAC-paquet, qui porte sur cent cinq bits par ligne, la décision de prise en compte ou non est prise pour chacun de ces cent cinq bits.

La fonction remplie par ce circuit 5, qui est très simple, est résumée par l'opération logique suivante :
si |cₖ-C_{c}-ĉₖ|< seuil de fiabilité, alors validation.

Ainsi le dispositif est muni d'un circuit de validation qui, à partir de la mesure de l'écart entre le signal reçu et le signal reconstruit, commande la prise en compte du signal de correction.

Dans un mode de réalisation préférentiel, le circuit 8 permettant de pondérer l'information issue du filtre 7 par les valeurs obtenues sur les lignes précédentes prend la forme d'un filtre non récursif dit à "Réponse Impulsionnelle Finie". L'avantage de ce filtre est d'avoir une réponse dont le retard par rapport aux données d'entrée est fixé pour une longueur de filtre donnée et pourra ainsi être compensé afin d'assurer une synchronisation parfaite.

Une réalisation simple et avantageuse est constituée par un moyenneur qui agit de préférence sur un nombre impair de données. Le retard engendré par le moyenneur est égal à sa demi-longueur, et vaut donc (N-1)/2 périodes de ligne si le filtre agit sur N données. Dans ce cas, le circuit 10 retarde de cette valeur le signal disponible à l'entrée 1 ou éventuellement en sortie du système classique d'alignement de la tension continue 2.

## Revendications

1. Appareil destiné à recevoir un signal véhiculant des informations de luminance et de chrominance analogiques associées à des périodes de signal numérique codé, muni d'un dispositif de restitution de la composante continue et d'un circuit décodeur (3) pour décoder le signal numérique reçu, caractérisé en ce que le dispositif de restitution de la composante continue comprend un organe de codage (4) réalisant à partir du signal numérique décodé un codage identique à celui utilisé pour la création du signal reçu, un circuit d'estimation (6) de la composante continue calculant ladite estimation à partir des différences entre le signal codé reçu (1) et le signal codé reconstruit par le susdit organe de codage (4), cette estimation constituant un signal de correction de composante continue, et un circuit soustracteur (9) pour retrancher au signal reçu ledit signal de correction, sur toute la durée d'une ligne.

2. Appareil selon la revendication 1, caractérisé en ce qu'il est muni d'un circuit de filtrage (7) en sortie du circuit d'estimation (6).

3. Appareil selon la revendication 2, caractérisé en ce que le circuit de filtrage (7) est un simple moyenneur.

4. Appareil selon la revendication 1, caractérisé en ce qu'il comporte en aval du circuit d'estimation (6) de la composante continue un filtre (8) utilisant les signaux de correction de plusieurs périodes de balayage de lignes à la fois pour affiner le signal de correction, avant sa soustraction au signal reçu dans le circuit soustracteur (9), ce filtre étant du type à réponse impulsionnelle finie, par exemple un moyenneur, et un circuit de retardement du signal reçu (10) placé en aval du circuit soustracteur (9), pour compenser le retard dû au filtre (8).

5. Appareil selon l'une quelconque des revendications précédentes, caractérisé en ce qu'il est muni, à l'entrée du décodeur (3), d'un circuit de soustraction (19) dans lequel le signal de correction est soustrait au signal reçu.

6. Appareil selon l'une quelconque des revendications précédentes, dont le décodeur (3) est du type à seuil, caractérisé en ce que l'organe de codage (4) est un circuit logique réalisant les opérations logiques suivantes:
si |cₖ-C_{c}|≦ seuil de décision, alors ĉₖ=0,
si cₖ-C_{c} < seuil de décision négatif, alors ĉₖ prend une valeur standard négative,
si cₖ-C_{c} > seuil de décision positif, alors ĉₖ prend une valeur standard positive,
où cₖ représente la valeur de l'échantillon duobinaire reçu,
ĉₖ la valeur de l'échantillon duobinaire reconstruit, et
C_{c} la valeur du signal de correction.

7. Appareil selon l'une quelconque des revendications 1 à 6, caractérisé en ce qu'il est muni d'un circuit de validation (5) qui, à partir de la mesure de l'écart entre le signal reçu et le signal reconstruit, commande la prise en compte du signal de correction.

8. Appareil selon la revendication 7, caractérisé en ce que le circuit de validation (5) commande la prise en compte signal de correction si |cₖ-C_{c}-ĉₖ| est inférieur à un seuil de fiabilité prédéterminé, cₖ représentant la valeur de l'échantillon duobinaire reçu, ĉₖ la valeur de l'échantillon duobinaire reconstruit, et C_{c} la valeur du signal de correction.

9. Appareil selon l'une quelconque des revendications précédentes, caractérisé en ce qu'il est muni en outre, en amont du décodeur, d'un dispositif (2) d'alignement de la tension continue basé sur des paliers de tension analogique contenus dans le signal reçu.

## Patentansprüche

1. Vorrichtung zum Empfangen eines Signals, mit dem einzelnen numerischen kodierten Signalperioden zugeordnete analoge Helligkeits- und Chrominanzinformationen übertragen werden, mit einer Vorrichtung zur Auswertung der Gleichstromkomponente und einer Dekodierschaltung (3) zum Dekodieren des empfangenen numerischen Signals, dadurch gekennzeichnet, daß die Vorrichtung zur Wiederherstellung der Gleichstromkomponente ein Kodierelement (4) umfaßt, das ausgehend von dem dekodierten numerischen Signal eine Kodierung gleich der vornimmt, wie sie für die Erzeugung des empfangenen Signals verwendet wird, ferner eine Auswerteschaltung (6) für die Gleichstromkomponente, die deren Wert aus Differenzen zwischen dem empfangenen kodierten Signal (1) und dem durch das vorgenannte Kodierelement (4) wiederhergestellten kodierten Signal berechnet, wobei der so errechnete Wert ein Gleichstromkomponenten-Korrektursignal darstellt, und eine Subtraktionsschaltung (9), mittels derer das Korrektursignal über die gesamte Dauer einer Zeile hinweg vom empfangenen Signal abgezogen wird.

2. Vorrichtung nach Anspruch 1, dadurch gekennzeichnet, daß sie mit einer der Auswerteschaltung (6) nachgeschalteten Filterschaltung (7) ausgestattet ist.

3. Vorrichtung nach Anspruch 2, dadurch gekennzeichnet, daß die Filterschaltung (7) aus einer einfachen Mittelungsschaltung besteht.

4. Vorrichtung nach Anspruch 1, dadurch gekennzeichnet, daß die Vorrichtung ein der Auswerteschaltung (6) für die Gleichstromkomponente nachgeschaltetes Filter (8) umfaßt, das gleichzeitig die Korrektursignale mehrerer Zeilenabtastperioden zum Abgleich des Korrektursignals verwendet, bevor dieses in der Subtraktionsschaltung (9) vom empfangenen Signal abgezogen wird, wobei dieses Filter als Filter mit endlicher Impulscharakteristik, zum Beispiel als Mittelungsschaltung, ausgebildet ist, und der Subtraktionsschaltung (9) eine Verzögerungsschaltung (10) für das empfangene Signal zum Ausgleich der durch das Filter (8) bedingten Verzögerung vorgeschaltet ist.

5. Vorrichtung nach einem der vorhergehenden Ansprüche, dadurch gekennzeichnet, daß die Vorrichtung ferner am Eingang des Dekodierers (3) mit einer Subtraktionsschaltung (19) ausgestattet ist, in der das Korrektursignal vom empfangenen Signal abgezogen wird.

6. Vorrichtung nach einem der vorhergehenden Ansprüche mit einem Schwellwertdekoder als Dekoder (3), dadurch gekennzeichnet, daß das Kodierelement (4) eine logische Schaltung ist, die die folgenden logischen Operationen ausführt:
Wenn |cₖ-C_{c}| < Entscheidungsschwelle, dann ĉₖ = 0,
wenn cₖ-C_{c} < negative Entscheidungsschwelle, dann nimmt ĉₖ einen negativen Standardwert an,
wenn cₖ-C_{c} > positive Entscheidungsschwelle, dann nimmt ĉₖ einen positiven Standardwert an,
wobei cₖ der Wert der empfangenen doppelt-binären Probe,
ĉₖ der Wert der wiederhergestellten doppelt-binären Probe und C_{c} der Wert des Korrektursignals ist.

7. Vorrichtung nach einem der Ansprüche 1 bis 6, dadurch gekennzeichnet, daß sie mit einer Validierungsschaltung (5) ausgestattet ist, die ausgehend von der Messung des Abstandes zwischen dem empfangenen Signal und dem wiederhergestellten Signal die Berücksichtigung des Korrektursignals steuert.

8. Vorrichtung nach Anspruch 7, dadurch gekennzeichnet, daß die Validierungsschaltung (5) die Berücksichtigung des Kurrektursignals steuert, wenn |cₖ-C_{c-}ĉₖ| kleiner ist als ein vorbestimmter Zuverlässigkeits-Schwellwert, wobei cₖ der Wert der empfangenen doppelt-binären Probe, ĉₖ der Wert der wiederhergestellten doppelt-binären Probe und C_{c} der Wert des Korrektursignals ist.

9. Vorrichtung nach einem der vorhergehenden Ansprüche, dadurch gekennzeichnet, daß sie im übrigen mit einer dem Dekoder vorgeschalteten Vorrichtung (2) zum Gleichspannungsabgleich auf der Grundlage der im empfangenen Signal enthaltenen analogen Gleichspannungsstufen ausgestattet ist.

## Claims

1. An apparatus for receiving a signal conveying analog luminance and chrominance information associated with coded digital signal periods, comprising a d.c. restoration circuit and a decoder circuit (3) for decoding the received digital signal, characterised in that the d.c. restoration circuit comprises a coding device (4) which on the basis of the decoded digital signal performs a coding operation similar that used to generate the received signal, a d.c. component estimation circuit (6) which calculates an estimate from the differences between the coded signal received (1) and the coded signal reconstructed by said coding device, which estimate constitutes a d.c. component correction signal, and a subtracter circuit (9) for subtracting said correction signal from the received signal throughout the duration of one line.

2. An apparatus as claimed in Claim 1, characterised in that it includes a filter circuit (7) at the output of the estimation circuit.

3. An apparatus as claimed in Claim 2, characterised in that the filter circuit (7) is a simple averager.

4. An apparatus as claimed in Claim 1, characterised in that downstream the d.c. component estimation circuit (6) it includes a filter (8) using the correction signals of several line scanning periods at a time to improve the correction signal, before the subtracter circuit (9) subtracts this correction signal from the received signal, said filter being of the finite impulse response type, for example an averager, and a delay circuit (10) arranged downstream the subtracter circuit (9), for delaying the received signal to compensate for the delay caused by the filter (8).

5. An apparatus as claimed in any one of the preceding Claims, characterized in that at the input of the decoder (3) it includes a subtracter circuit (19) which subtracts the correction signal from the received signal.

6. An apparatus as claimed in any one of the preceding Claims, wherein the decoder (3) is of the type having a threshold, characterised in that the coding device (4) is a logic circuit performing the following logic operations:
if |cₖ-C_{c}|≦ decision threshold, ĉₖ = 0,
if cₖ-C_{c} < negative decision threshold (14), ĉₖ assumes a negative standard value
if cₖ-C_{c} > positive decision threshold, ĉₖ assumes a positive standard value, where cₖ represents the value of the received duobinary sample, ĉₖ represents the value of the reconstructed duobinary sample, and C_{c} represents the value of the correction signal.

7. An apparatus as claimed in any one of the Claims 1 to 6, characterised in that it includes a validation circuit (5) which, on the basis of the measurement of the deviation between the received signal and the reconstructed signal, determines whether the correction signal is to be taken into account.

8. An apparatus as claimed in Claim 7, characterised in that the validation circuit (5) decides that the correction signal is to be taken into account if |cₖ-C_{c}-ĉₖ| is smaller than a given reliability threshold, cₖ representing the value of the received duobinary sample, ĉₖ representing the value of the reconstructed binary sample, and C_{c} representing the value of the correction signal.

9. An apparatus as claimed in any one of the preceding Claims, characterised in that upstream the decoder it further includes a d.c. clamping device (2) based on analog voltage porches contained in the received signal.
